**Europäisches Patentamt**

**European Patent Office**

**Office européen des brevets**

(19)

(11) Publication number : **0 520 350 A1**

# (12) EUROPEAN PATENT APPLICATION

(21) Application number : **92110464.2**

(22) Date of filing : **21.06.92**

(51) Int. Cl.⁵ : **B31B 1/24,** B31B 1/82, B32B 31/08

(30) Priority : **27.06.91 IT MI911771**
**02.06.92 IT MI921353**

(43) Date of publication of application :
**30.12.92 Bulletin 92/53**

(84) Designated Contracting States :
**AT BE CH DE ES FR GB LI SE**

(71) Applicant : **MECCANICA ROBECCHESE sas**
**Via Sangiorgio Abbondio**
**I-20145 Milano (MI) (IT)**

(72) Inventor : **Politi, Pietro, c/o Meccanica**
**Robecchese sas**
**Via Sangiorgio Abbondio**
**I-20145 Milano, MI (IT)**
Inventor : **Poggi, Carlo, c/o Meccanica**
**Robecchese sas**
**Via Sangiorgio Abbondio**
**I-20145 Milano, MI (IT)**

(74) Representative : **Trupiano, Roberto**
**BREVETTI EUROPA S.r.l. Piazza Bernini, 6**
**I-20133 Milano (MI) (IT)**

(54) **Synchronized apparatus and process for cutting windows through tapes and applying labels onto said windows.**

(57)    Automatic apparatus for cutting windows through a continuous paper tape or the like, and closing said windows by means of pieces of transparent film, or film bearing labels and the like, which apparatus comprises means in order to cause said tape to translate through a window cutting unit (4, 4a), then through a glueing unit (10, 11, 13) and finally through an assembly unit (16, 17, 20), with said cutting unit and said glueing unit being longitudinally translatable relatively to tape ; and comprising means for intermittently stopping, for preset time intervals, said tape, as a function of the required distance between said windows, the intervention of said means for tape stopping and for translating said glueing unit and said window cutting unit being controlled by a suitably programmed electronic computer.

Process for cutting said windows through a tape, and for closing said windows, which uses the above said automatic apparatus.

FIG. 2

EP 0 520 350 A1

The present invention relates to an automatic apparatus for continuously cutting windows having various shapes and various dimensions, through paper tapes, plastics tapes, or the like, or also through single sheets and for applying, onto a face of said tapes or said sheets, over said windows, pieces of a tape, or sheets, of another material and/or with different characteristics, such as labels or squares of transparent sheets, and/or printed sheets and/or sheets bearing printed patterns, so as to achieve a tape or tape pieces which can be used in commercial field, for example in order to produce mail envelopes with address windows closed with a square or transparent material, and analogous products which are widely used in advertising field, in the field of packaging in general, and in analogous fields.

A further object of the present invention is an automated process for cutting said windows through a tape, by using said automatic apparatus.

At present, in order to continuously produce variously shaped and variously positioned windows through paper tapes, plastics tapes, and the like, or also through sheets with a defined length and in order to apply, also continuously, squares of transparent sheets or printed sheets onto said windows, machines are used which are equipped, on line, with a feeding-driving unit for the tape through which said windows have to be cut, a rotary-roller window-cutting unit which cuts the windows, a glueing unit of the type with glue-applying roller, which applies glue ("adhesive agent") around the edges of the windows, an assembly unit, also equipped with rollers, which cuts square pieces from a transparent film or a label-bearing films, unrolled from a separate roll, and applies said square pieces, obtained in that way, around the edges of the windows, and a driver unit for the processed tape, by now with said windows closed with said squares, and for rolling-up said tape on a collecting roll, and/or a unit in order to cut said tape into pieces with preset length, and stacking the resulting cut pieces, to yield a collecting stack.

The feeding-driver unit is normally constituted by two endless belts provided with equally spaced-apart teeth which get engaged inside corresponding holes longitudinally provided along opposite tape edges. The window-cutting unit is constituted by a roller, or cylinder, with magnetized surface on which one punch, or a plurality of punches, realized as hollow punches ("dinking dies") is/are positioned and retained, which has/have suitable size(s) and shape(s) in order to cut windows with required size(s)/shape(s); the tape is fed between said magnetized roller and a counter-roller, and through said tape said punches provide the cuts which define the windows; a further hollow roller, provided with slots or holes and first depressurized and then pressurized, retains the tape piece cut away from the window and then discharges it from said roller. The glueing unit is constituted by a pair of rollers, parallel to, and into contact with, each other, one of which is peripherally provided with rubber pads, or the like, having the same contour as of the windows, but with larger outer dimensions, suitable for receiving an adhesive agent from adhesive-agent transfer rollers; said pads are applied in radial and axial positions on the support roller, which positions correspond to the radial/axial positions of the hollow punches installed on the magnetized roller, in order to enable the glueing zones and the windows to be perfectly trued relatively to each other. In order to enable said trueing, the glueing roller shoud have the same outer diameter as of the cutting roller.

The assembly unit is constituted by rollers parallel to, and into contact with, each other, between which rollers the tape with the glue laid along the peripheral edges of the windows travels, whereas the continuous, transparent, or label-bearing film, or the like, unwound from a film roll, is fed between one of said rollers and a third roller equipped with cutting blades longitudinally protruding from said roller and spaced apart from each other, so as to subdivide said transparent film into a plurality of square pieces which, running through the rollers through which also the tape with windows with peripherally applied adhesive agent, runs, are caused to adhere to the areas which surround said windows; a counter-roller, opposite to the blade-bearing roller, is internally hollow and is provided with holes or apertures through its surface, so as to make it possible the cut film portions to be retained at a first time, and then, through a subsequently applied pressure, the cut scrap portions to be expelled and discharged.

In this apparatus, the film through which windows have to be cut and have to be coated with portions of another tipe of film or tape, is driven, and kept taut, at a constant speed between said feeding-driver unit and said assembly unit, by means of a driver unit analogous to the unit installed upstream from the punch-bearing magnetized roller.

The feed speed of the tape through which windows have to be cut, is normally comprised within the range of from 80 to 150 metres/second, and the synchronous revolution of the various rollers is normally accomplished by means of one single ratiomotor drive means, or the like.

Although these known apparatus types are satisfactory from the standpoint of production precision and repeatability, in practice said apparatus types known from the prior art suffer from considerable use limitations and consequent heavy financial and operating burdens, due, above all, to the matter of fact that, in order to produce different-length formats, i.e., tapes with windows cut through them at different longitudinal distances from each other, each time, and for each window format, the cutting roller, the glueing roller and the assembly roller have all to be replaced by rollers with different diameter; with the reason for this being, as already said, that the diameter of said rollers has to be selected as a function of the length of the product to be obtained, i.e., of the distance, in the axial direction of the tape, of the individual windows.

Consequently, in order to be able to obtain formats with windows positioned at different distances, one should have available a plurality of sets of rollers with different diameters, with self-explanatory considerable financial burdens and considerably long dead times in order to replace them. For example, a normal fitting for a presently available apparatus of the prior art, is constituted by 13 cutting rollers, 13 glueing rollers and 8 assembly units.

The purpose of the present invention is of providing an apparatus for producing windows through paper tapes, defined-length sheets, and the like, and for closing said windows by means of sheets of a material, which may be transparent, or may bear various kinds of labels, which is so conceived and implemented as to obviate the drawbacks and use limitations which are displayed by the apparatuses known from the prior art and, above all, is such as to result to be highly flexible and highly practical in use.

Another purpose of the present invention is of providing an apparatus of the above specified type, which is so structured as to make it possible differently-shaped formats with any length to be obtained, according to the market demand for these products, without requiring the replacement of the rollers, and in automatic way and practically without requiring dead times, and manual interventions.

Still a further purpose of the invention is of providing a process which makes it possible formats to be obtained with different windows lengths, and with a different number of windows, and with differently positioned windows according to the market demands for these products, in automatic way and practically without requiring dead times and burdensome intervention in order to replace parts of the used apparatus.

These and still other purposes, which will be evidenced more clearly by the following disclosure, are achieved by an apparatus for continuously cutting windows through a tape, or defined-length sheets or the like, and closing said windows by means of pieces of transparent film, or of films bearing any kinds of labels, of the type which comprises, on line, a tape or sheet feeding unit, a window cutting unit which cuts said windows by means of a pair of parallel rollers, one of which is a magnetized roller and performs the task of keeping positioned in place and supporting cutting hollow dies, a parallel-rollers unit with at least one of said parallel rollers provided with suitable pads in order to apply an adhesive agent around the peripheral zones of each window, an assembly unit, equipped with rollers, for feeding, and cutting into pieces, or squares, a continuous, transparent film, or a film bearing writings, labels, or the like, in order to couple said pieces or squares with said windows, a tape tensioning device, a film rolling-up and/or cut sheet stacking device, and at least one ratiomotor drive means for driving said rollers to revolve with synchronous revolution speeds, in which apparatus, according to the present invention, said cutting unit, comprising said hollow pungh bearing roller, and said glueing unit, comprising said glueing pad bearing roller, are longitudinally translatable from and towards said assembly unit, and can be positioned at preset distances from the latter, and said tape or sheet can be intermittently stopped for preset time intervals, with the following means being furthermore provided: drive means to drive the rollers of the operating units to revolve at synchronized speeds; means for stopping the tape or the sheet, through which said windows have to be cut, intermittently and for preset time intervals, as a function of the desired distance between said windows; and means for shifting and positioning said window cutting unit and said glueing unit, so as to be able to adjust their distance from said assembly unit, as a function of the mutual distance between the windows to be cut through the tape, said means and their intervention sequence being enslaved to an electronic computer which is programmed in such a way as to make it possible said sequence of interventions to be automatically performed in order to obtain window formats of different lengths, and with different numbers of windows, at various running speeds of the tape through which said windows have to be cut.

More particularly, said window-cutting unit and said glueing unit are mounted translatable in both directions, from a position of maximal distance from said assembly unit, to a position of minimal distance from the latter.

Furthermore, the protruding height of said cutting hollow punches, and of said glueing pads is such that the respective rollers can freely revolve with tape being stationary, without unterfering with the latter. Further characteristics and advantages of the present invention will be clearer from the following disclosure in detail of a preferred, non-exclusive, form of practical embodiment of the same invention, made by referring to the accompanying drawing tables, supplied for only indicative, non-exclusive, purposes, in which:

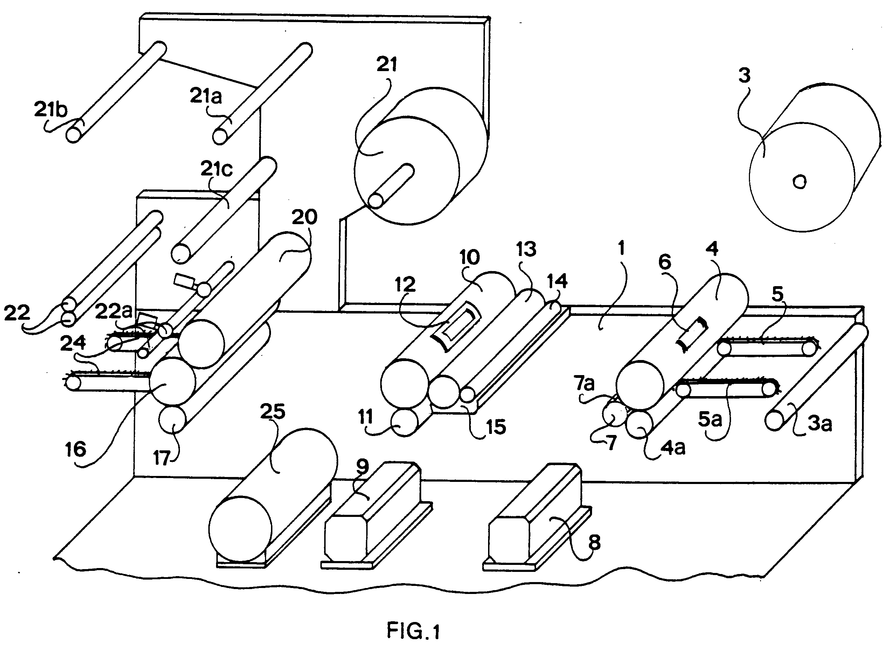

Figure 1 shows a schematic, axonometric view of an apparatus accomplished according to the present invention, and

Figure 2 shows an also schematic side elevation view of the same apparatus of Figure 1.

Referring to such figures, the apparatus according to the present invention is provided with the cutting unit, the glueing unit and the assembly unit.

Between two vertical walls 1 of a support framework, a feeding device is provided to feed a paper tape, or the like, 2, to be processed (through which windows have to be cut), which tape is continuously unwound from a roll 3 and is sent, after changing its traveling direction around a roller 3a, to run through the nip between two parallel rollers 4-4a, by means of two endless, i.e., closed-loop belts, each of which is provided with protruding teeth (pins) engaging with equidistant holes provided along the longitudinal edges of the same tape 2; the upper roller 4 is provided with a magnetized surface, magnetized by means of permanent magnets, so as to fixedly retain in various positions, both axially and radially, window-cutting punches 6, which substantially are protruding hollow punches (dinking dies), the geometrical shape of which may vary in accordance with the shape of the windows to be cut through the tape during the revolution of the magnetized roller against the underlying roller 4a.

Into contact with the rollers 4 and 4a, and downstrem from them, there is provided a hollow roller 7, provided with longitudinal slots, or sets of holes, 7a, inside which, while the hollow punches cut the windows against the counter-roller 4a a depressure is generated by means of a vacuum pump 8, so as to retain the cut away portion of tape, while said roller revolves by a certain angular distance, and to discharge it later-on, by delivering compressed air into the same roller, through a compressor, or compressed-air source 9.

After cutting the windows, the tape 2 is caused to run between two rollers 10 and 11, the upper roller 10 of which is peripherally provided with pads 12 made of an elastically yielding material, such as rubber or the like, which, as to their positions, and to their number, are arranged in angular positions corresponding to the positions of the hollow punches on the magnetized roller 4.

Said pads 12 are made with a geometrical shape which is substantially equal to the shape of the corresponding hollow punches, but with larger dimensions, so as to be capable of depositing, around the edges of said windows, when said windows pass between the rollers 10 and 11, a layer of an adhesive agent which said pads receive from two parallel rollers 13 and 14 which perform the task of transferring the glue, by dipping into a tray 15 which contains said glue.

After leaving the glueing rollers 10-11, the tape 2 is sent to an assembly unit which is constituted by the rollers 16, 17 and 20, the function of which is of applying, under pressure, pieces or squares of a plastics or paper film or sheet, which may be transparent, or may bear variously preprinted labels or the like, onto the tape, and namely onto the windows cut through said tape.

For that purpose, to the same assembly unit the film is fed which is unwound from a roll 21; said film is driven through various parallel rollers 21a-21b-21c and then between pairs of parallel rollers 22 and 22a, and then through said assembly unit, inside which said film is cut by means of blades suitably arranged on rollers, to yield a plurality of film pieces or squares which are caused to adhere onto the windows, already provided with glue, cut through the tape 2 when the latter runs through said rollers of the assembly unit; the scraps of transparent film, or the like, resulting after said film cutting into pieces or squares, useless because, after said cutting into pieces, they do not correspond to the windows to be closed, are first retained by the vacuum, and then are expelled by means of pressurized air, as in the case of the hollow roller 7 of the cutting unit.

The tape 2 with its windows being closed by the pieces of transparent film, or labels is then sent to a rolling-up, or stacking, unit, by means of a pair of endless belts 24, provided with suitable retainer teeth, which pair of belts, together with the pair of belts 5-5a, also keeps the tape under a suitably taut condition.

In this apparatus, the rollers of the operating units are kept revolving and synchronized at a constant revolution speed, by means of a ratiomotor drive means 25, and have a same outer diameter in order to enable the glueing pads 12 to be in a trued position relatively to the corresponding windows of the tape 2.

On the contrary, the tape 2 is intermittently stopped for preset time periods, so calculated as to allow the hollow punches and the glue-bearing pads to operate on the tape at different positions according to the stopping times of the latter, thus accomplishing different distances, or spaces, between adjacent windows and therefore different dimensions of the end sheet obtained, also when the tape is processed with the same rollers, always having a same outer diameter.

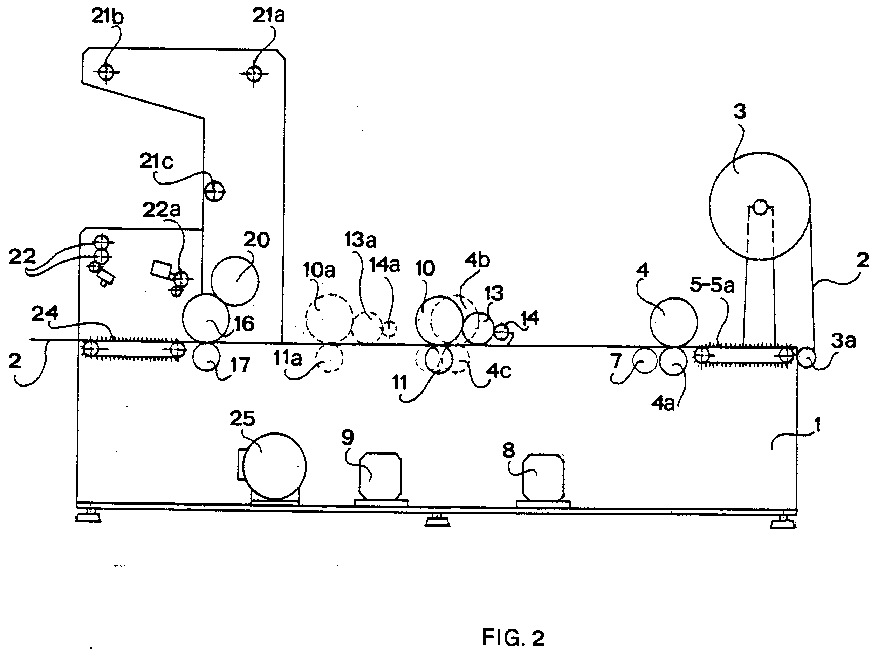

Still according to the present invention, as a function of the tape stopping times and of the distance between two adjacent windows on the tape, the glueing unit constituted by the rollers 10 and 11, and by the glue transfer rollers 13-14 and the window-cutting unit constituted by the rollers 4, 4a and 7, are installed translatable relatively to the assembly unit, and namely from a position of maximal distance from the same unit, to a position close to the latter, as indicated, e.g., in dotted lines, with 10a-11a and with 4b and 4c, respectively, in Figure 2, so as to be capable of being suitably positioned.

By suitably positioning the cutting unit and the glueing unit, the respective rollers of which are kept constantly revolving with constant revolution speed, and stopping the movement of the tape at preset time points, and for preset time intervals, e.g., by acting on the driver/tensioner belts 5, 5a and 24, with the apparatus according to the present invention, one can cause the position of the glueing pads to coincide with the corresponding windows, when said windows are positioned at a whatever distance from each other, lengthwise to the tape.

For example, if one wishes to obtain windows at a distance which is a half of said maximal distance, it will be enough if the tape is stopped for a time which corresponds to a half turn of window-cutting roller 4 and positions the glueing unit at half way between the position of maximal distance and the position of the cutting roller; in that way, windows will be obtained which are distributed with a distance between each other, which is a half of the maximal distance allowed, so that, by performing preset stoppings of the tape and corresponding translations of the cutting unit and of the glueing unit, formats of any size can be obtained within the limit of maximal shift provided for said units.

The possibility of causing the gluing rollers and the cutting roller to revolve with the tape being stationary, is allowed by the presence of the hollow punches and of the glueing pads which make it possible, even although their protruding height is quite low, said rollers to be kept spaced apart from their respective counter-rollers and therefore to revolve without interfering with the tape while the latter is stationary.

In order to control the stopping of the tape during the preset time periods, the corresponding translations of the units, the interventions of the suction and force pumps, and to regulate the tape translation speed, a suitably programmed electronic computer is provided, which is capable of enabling formats of any lengths to be accomplished, without that any manual interventions are performed on the components of the apparatus.

Said computer can be constituted by a microcomputer or microprocessor, which can be programmed from time to time, or can be equipped with a storage unit, previously loaded with the necessary data in order to make it possible a same process to be repeated and the several combinations to be accomplished; in particular, in order to detect the speed of tape 2, an analogic-digital encoder of the type with brushes, or the like, can be used, associated with the motor shaft or with the shaft of one of the mutually synchronized rollers, which encoder detects the changes in angular shaft position, and sends to the computer signals corresponding to said changes; the computer, after processing the input signals and comparing them to the preset data, sends the control signals, through sensors, solenoid valves and electromagnetic switchgears, to regulate the speed of the tape, to perform the pre-established stops of the latter as a function of the format to be produced, to cause the operating units to translate and to cause said suction and force pumps to operate.

More particularly, and still according to the present invention, a process to obtain formats with different lengths and with different window numbers, in an automatic way and without interventions to replace parts, by means of devices comprising a tape feeding unit, a translatable cutting unit equipped with a roller to support and position the hollow punches which cut the windows, an assembly unit to feed, cut and couple labels, or the like, with said windows, devices for keeing the tape taut and to roll up or stacking up the produced format, comprises the following steps:

- charging and positioning the paper tape, or the like, to/inside the purposely provided feeding unit;
- positioning the selected hollow punch at a reference point purposely reported on the roller of the cutting unit;
- selecting and calling the selected processing program on Numerical Control, point-by-point, suitable for controlling the revolution speed and/or position of the cutting unit, glueing unit, applier roller, tape driving unit and assembly unit, driven by means of variable-speed motor means;
- starting the execution of said program, with the computer-managed automated production cycle being started up, which controls and regulates:
- the longitudinal position of said mobile cutting unit and of said mobile glueing unit, i.e., both of them being mobile relatively to said fixed-position assembly unit, as a function of the desired format, by means of a first motor means and a second motor means capable of causing both said mobile units to longitudinally translate along one single, purposely provided guide;
- the revolution speed of the rollers of said units, adjusting said revolution speed at a suitable speed value within a range of from 0 to 150 m/min, expressed as the peripheral speed of said rollers;
- the speed of feed of paper tape, or the like, synchronizing it with the revolution speed of the rollers;
- the stops and the duration of the same stops, of the tape, as a function of the desired format, in such a way that said tape only progresses by the distance which is necessary in order to get synchronized with said hollow-punch bearing roller of said cutting unit, with, on said cutting unit, at leats two encoders being provided, the first of which, connected with said Numerical Control, measures the speed of the roller and enables the computer to synchronize it with the movement of the paper, and the second encoder, with 280 i/g, is read by a programmable-logics controller ("PLC"), which supplies the Numerical Control with the necessary data in order to cause the progressing of the tape to be started-up and to be stopped, so as to realize a variable format of from 4 inches to 28 inches;
- the speed of the assembly unit of polythene tape (or the like), synchronizing said speed with the revolution speed of the rollers;

with the length of the tape to be applied onto the cut window being controlled by counting suitable markers read by an inductive sensor,

with the movement of the motor means which drives the tape feeding unit being of on/off type, with start-up being caused by an electrical command mechanically synchronized with the rollers, and with the stop being caused by the marker counter,
with the tension of the tape being governed in an automatic way by a suitable device with a potentiometric transducer, and
with the cutting of the tape being with mechanical synchronism.

From the above, it clearly appears that the automatic apparatus disclosed hereinabove and the relevant process make it possible a higher productivity to be achieved relatively to the apparatuses and processes known from the prior art, thanks to the absence of dead times required in order to perform the replacement of the cutting, glueing and assembly rollers, with any kinds of formats as demanded by the market being obtained, without limitations as regards the dimensions thereof; in particular, any formats comprised within the range of from 4 inches to 28 inches can be produced, with the cylinders revolving at production revolution speeds comprised within the range of from 0 to 150 m/minute.

Obviously when the finding, as disclosed hereinabove, will be practically implemented, structurally and functionally equivalent modifications may be supplied to it without departing from the scope of protection of the same finding.

## Claims

1. Automatic apparatus for continuously cutting variously shaped windows, at preset distances, through a tape, or defined-length sheets of paper or the like, and applying, to close said windows, pieces or squares of transparent film, or film bearing any kinds of labels, of the type which comprises a tape feeding unit, a window cutting unit which cuts said windows by means of a pair of parallel rollers, one of which is a magnetized roller, which makes it possible window-cutting hollow dies to be positioned in place and supported, a parallel-rollers unit with at least one of said parallel rollers being provided with suitable pads in order to apply an adhesive agent around the peripheral zones of each window, an assembly unit, of roller type, for feeding, and cutting into pieces, or squares, a continuous, transparent film, or a film bearing writings, labels, or the like, in order to couple said pieces or squares with said windows, a tape tensioning device, a rolling-up and/or cut sheet stacking-up device, and at least one ratiomotor drive means for driving said rollers to revolve with synchronous revolution speeds, which apparatus is characterized in that said cutting unit, comprising said hollow pungh bearing roller, and said glueing unit, comprising said glueing pad bearing roller, are longitudinally translatable from and towards said assembly unit, and can be positioned at preset distances from the latter, and said tape or sheet is intermittently stopped for preset time intervals, with the following means being furthermore provided: means to drive the rollers of the operating units to cause said rollers to revolve at synchronized speeds; means for stopping the tape or the sheet through which said windows have to be cut, intermittently and for preset time intervals, as a function of the desired distance between said windows; and means for shifting and positioning said cutting unit and said glueing unit, so as to be able to adjust their mutual distance and their distance from said assembly unit, as a function of the distance between the windows to be cut through the tape, said means and their intervention sequence being enslaved to an electronic computer which is programmed in such a way as to make it possible said sequence of interventions to be automatically performed.

2. Apparatus according to claim 1, characterized in that said window cutting unit and said glueing unit are mounted with possibility of longitudinally translating in both directions, from a position of maximal distance from said assembly unit, to a position of minimal distance from the latter.

3. Apparatus according to claim 1, characterized in that said window-cutting hollow punches and said glueing pads are made protruding, relatively to their respective support rollers, such as to enable said rollers to freely revolve, while the tape is stationary, without interfering with the latter.

4. Apparatus according to claim 1, characterized in that to said electronic computer a pulse encoder is enslaved which is capable of detecting the angular shifts of the motor shaft and/or of the shafts of the synchronized rollers, so as to enable the computer to compare them to the preset data, in connection with each tape stop and with the corresponding stop duration, and to emit signals which are capable of commanding, through sensors, solenoid valves, switchgears and the like, the sequence of the operating steps of the apparatus, to take place in an automatic way.

5. Process for continuously producing variously shaped windows, at a prefixed mutual distance, through a tape, or defined-length sheets, of paper, or the like, and for applying pieces or squares of transparent sheets, or of sheets bearing various kinds of labels, in order to close said windows, by using an apparatus according to claim 1, comprising a tape feeding unit, a translatable cutting unit equipped with a roller to support and position the hollow punches which cut the windows, a translatable glueing unit, an assembly unit to feed, cut and couple labels, or the like, with said windows, devices for keeping the tape taut and to roll up or stacking up the produced format, characterized in that said process comprises the following steps:

- charging and positioning the paper tape, or the like, to/inside the purposely provided feeder unit;
- positioning the selected hollow punch at a reference point purposely reported on the roller of the cutting unit;
- selecting and calling the selected processing program on Numerical Control, point-by-point, suitable for controlling the revolution speed and/or position of the cutting unit, glueing unit, applier roller, tape driving unit and assembly unit, driven by means of variable-speed motor means;
- starting the execution of said program, with the computer-managed automated production cycle being started up, which controls and regulates:
- the longitudinal position of said mobile cutting unit and of said mobile glueing unit, i.e., both of them being mobile relatively to said fixed-position assembly unit, as a function of the desired format, by means of a first motor means and a second motor means capable of causing both said mobile units to longitudinally translate along one single, purposely provided guide;
- the revolution speed of the rollers of said units, adjusting said revolution speed at a suitable speed value within a range of from 0 to 150 m/min, expressed as the peripheral speed of said rollers;
- the speed of feed of paper tape, or the like, synchronizing it with the revolution speed of the rollers;
- the stops and the duration of the same stops, of the tape, as a function of the desired format, in such a way that said tape only progresses, as necessary in order to get synchronized with said hollow-punch bearing roller of said cutting unit, with, on said cutting unit, at leats two encoders being provided, the first of which, connected with said Numerical Control, measures the speed of the roller and enables the computer to synchronize it with the movement of the paper, and the second encoder, with 280 i/g, is read by a programmable-logics controller ("PLC"), which supplies the Numerical Control with the necessary data in order to cause the progressing of the tape to be started-up and to be stopped, so as to realize a variable format of from 4 inches to 28 inches;
- the speed of the assembly unit of polythene tape (or the like), synchronizing said speed with the revolution speed of the rollers;

with the length of the tape to be applied onto the cut window being controlled by counting suitable markers read by an inductive sensor,

with the movement of the motor means which drives the tape feeding unit being of on/off type, with start-up being caused by an electrical command mechanically synchronized with the rollers, and with the stop being caused by the marker counter,

with the tension of the tape being. governed in an automatic way by a suitable device with a potentiometric transducer, and

with the cutting of the tape being with mechanical synchronism.

FIG.1

FIG. 2

**European Patent Office**

# EUROPEAN SEARCH REPORT

**Application Number**

EP 92 11 0464

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 117 623 (ADOLPH COORS) <br> * abstract * <br> * page 5, line 32 - page 15, line 6 * <br> --- | 1,3-5 | B31B1/24 <br> B31B1/82 <br> B32B31/08 |
| A | EP-A-0 264 940 (J K KECK) <br> * the whole document * <br> --- | 1,2,5 | |
| A | US-A-3 957 570 (H W HELM) <br> * column 5, line 47 - column 6, line 18 * <br> --- | 1,5 | |
| A | US-A-2 734 431 (H L BARTELT) <br> * column 2, line 30 - line 41 * <br> * column 3, line 71 - column 4, line 33; figure 6 * <br> --- | 1,4,5 | |
| A | US-A-4 413 984 (S S ALTER) <br> * abstract * <br> * column 3, line 23 - column 4, line 66 * <br> --- | 1,4,5 | |
| A | EP-A-0 419 773 (LANDIS & GYRE) <br> * column 3, line 41 - line 55 * <br> * column 4, line 20 - line 34 * <br> * column 6, line 45 - column 8, line 5 * <br> * column 8, line 27 - line 41 * <br> --- | 1,4,5 | **TECHNICAL FIELDS SEARCHED (Int. Cl.5)** <br><br> B31B <br> B32B |
| A | MACHINE DESIGN <br> vol. 57, no. 19, August 1985, CLEVELAND, OHIO, USA <br> pages 66 - 71 <br> C WALL 'THE MOVE TO ELECTRONICS' <br><br> ----- | | |

The present search report has been drawn up for all claims

| Place of search | Date of completion of the search | Examiner |
|---|---|---|
| THE HAGUE | 01 OCTOBER 1992 | PHILPOTT G.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)